# EUROPEAN PATENT APPLICATION

(11) **EP 4 661 045 A1**
(43) Date of publication of application: **10.12.2025**
(21) Application number: 24179914.7
(22) Date of filing: 04.06.2024
(51) Int. Cl.: H01H 33/12, H01H 33/22, H01H 33/56

(54) **SF6 FREE GAS INSULATED DISCONNECTOR WITH FULLY CLOSED ARCING CHAMBER AND SPRING ACTUATION**

(71) Applicant: GE Vernova Technology GmbH, 5400 Baden (CH)
(72) Inventor: GUYON, Olivier, 73100 Aix-les Bains (FR); MONTBEL, Matthias, 73100 Aix-les Bains (FR)
(74) Representative: Rüger Abel Patentanwälte PartGmbB

(57) **Abstract**

The invention concerns disconnector (100) for a GIS comprising,, in a gas chamber and along an axis (AA'):
- a pair of permanent contacts (24, 41), both being fixed;
- an electrically conducting tube (30) movable along said axis (AA') the tube (30) moving from a position in which both permanent contacts are in electrical contact to a position in which both main contacts are electrically separated;- a pair of arcing contacts (22, 42), one (22) fixed and the other one (42) movable with respect to said electrically conducting tube (30);
- a pair of rear contacts (52₁, 52₂), one of them (52₂) being in electrical with said movable arcing contact (42);
- means (25) for slowing down the movable arcing contact (42) when separating it from the fixed arcing contact (22);
- means (6) for moving said electrically conducting tube (30) and said movable arcing contact (22, 42) along said axis (AA'), thereby opening said disconnector (100) and for separating said rear contacts (52₁, 52₂) from each other before the arcing contacts (22, 42) separate.

## Description

### TECHNICAL FIELD AND PRIOR ART

The invention relates to the gas-insulated substations, commonly referred to as Gas-Insulated Substations (GIS). Substations of this type comprise disconnectors, circuit-breakers, or grounding switches. Switchgear components are generally metal tanks filled with SF₆ (sulfur hexafluoride) under pressure.

Sulfur hexafluoride (SF₆) being estimated to contribute to the greenhouse effect, it was recently replaced by other gas, the so-called "g3" comprising heptafluoroisobutyronitrile mixed with a dilution gas comprising carbon dioxide and oxygen is used in replacement of SF₆, opening the path to a new generation of high voltage (HV) electrical transmission equipment. g3 has a drastically reduced environmental impact (more than 99% less gas global warming potential (GWP)).

But it has been noticed that powder is generated during the opening of disconnectors of GIS implementing said gas. This powder, which results from the decomposition of the g3 gas used in replacement of the SF₆ is harmful for dielectric strength. Actually, g3 decomposition is combined with molted metal lead to metal oxyde particules which are spread on the corona shield surface, leading to peak effect.

There is therefore the problem of limiting the generation of this powder and/or of confining it, partially or fully.

### SUMMARY OF THE INVENTION

In order to solve the above problem, the inventors have found a solution to confine the arc generated during disconnector switching.

The invention first concerns a disconnector for a GIS comprising:
- a pair of permanent contacts, for example one fixed and the other one movable or both being fixed with respect to each other;
- a pair of arcing contacts, for example one being fixed and the other one movable with respect to the fixed one;
- a pair of rear contacts, one of them being in electrical contact with said movable arcing contact;
- means for slowing down (preferably briefly) slowing down or stopping (preferably briefly) the movable arcing contact when separating from the fixed arcing contact and for separating said rear contacts from each other before the arcing contacts separate.

Preferably, an electrically conducting tube is movable along said axis (AA') the tube being movable from a position in which both permanent contacts are in electrical contact with each other to a position in which both main contacts are electrically separated from each other. The movable arcing contact can be moved with respect to said electrically conducting tube.

In an embodiment, said means for slowing down or stopping the movable arcing contact when separating from the fixed arcing contact comprise a restriction of the movement of the movable arcing contact. For example it comprises a surface inclined with respect to the axis (AA'), for example with an angle comprised between 20° and 40°.

A disconnector according to the invention may comprise a rod having a first end forming the movable arcing contact and a second end forming or bearing one of said rear contacts. Said rod can be mounted slidable with respect to said tube.

A disconnector according to the invention can comprise means for pressing said rear contacts towards each other and possibly for forcing said movable arcing contacts to separate. In an embodiment, said means comprise a compression spring, for example comprising a first end bearing against a part fixed with respect to said movable main contact and a second end bearing against one of said back contacts.

The invention also concerns a GIS comprising:
- a metal tank filled with a gas;
- a disconnector according to the invention, as disclosed above or in this application.

The invention also concerns a method for opening a disconnector of a GIS according to the invention, comprising:
- moving the movable arcing contact and the movable main contact, thereby closing the pair of arcing contacts and separating the pair of permanent contacts from each other;
- slowing down (preferably briefly) or stopping (preferably briefly) the movement of the movable arcing contact with respect to the fixed arcing contact;
- separating said pair of rear contacts from each other before the arcing contacts separate, thereby triggering an arc between said rear contacts.

The invention also concerns a method for closing a disconnector of a GIS according to the invention, comprising:
- moving the movable arcing contact and the tube with respect to the fixed arcing contact and the main contacts, thereby closing the pair of arcing contacts ;
- closing the main contacts;
- opening the arcing contacts.

### BRIEF DESCRIPTION OF THE DRAWINGS

- figure 1 shows an example of a Gas-Insulated Substations;
- figures 2A - 2E show an example of a disconnector according to the invention;
- figures 3A- 3B show an embodiment of an arcing contact according to the invention;
- figure 4 shows a displacement - stress curve of the fingers of an arcing contact of a disconnector according to the invention.

### DETAILLED DESCRIPTION OF SPECIFIC EMBODIMENTS

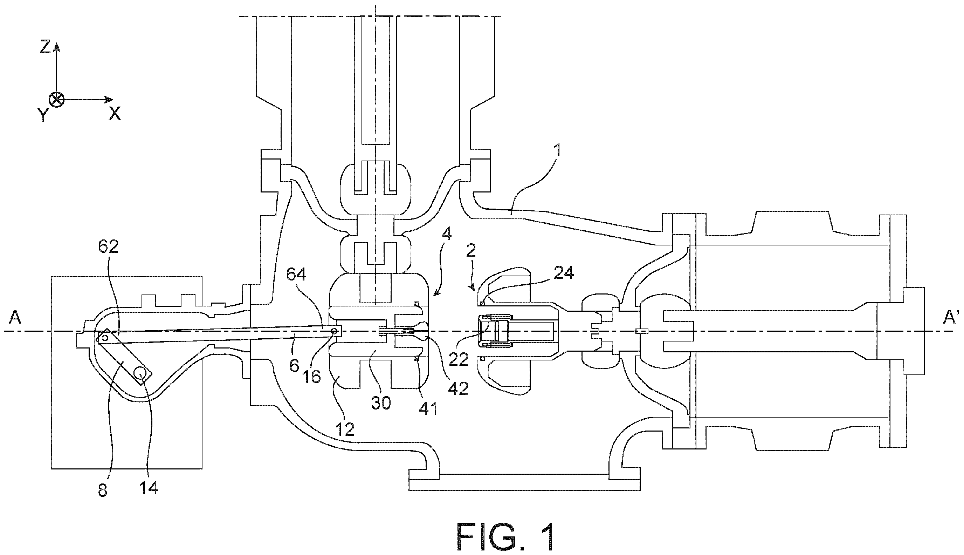

An example of a metal tank 1, or interrupting chamber, which can comprise a disconnector according to the invention, is illustrated on figure 1. The metal tank 1 is filled with a gas, for example the "g3" gas comprising heptafluoroisobutyronitrile mixed with a dilution gas comprising carbon dioxide and oxygen.

For example, said gas may comprise:
- heptafluoroisobutyronitrile and/or heptafluoroisopropyl trifluoromethyl ketone (also named 2- butanone, 1,1,1,3,4,4,4-heptafluoro-3-(trifluoromethyl)- (CAS No 756-12-7)), possibly mixed with a gas or a dilution gas comprising at least CO2 and/or O2 and/or N2 and/or an oxygenated compound;
- or at least CO2 and/O2 and/or N2 and/or an oxygenated compound and/or water vapor.

Said metal tank can be surrounded, or can be intended to be surrounded by an atmosphere containing some water and/or water vapor.

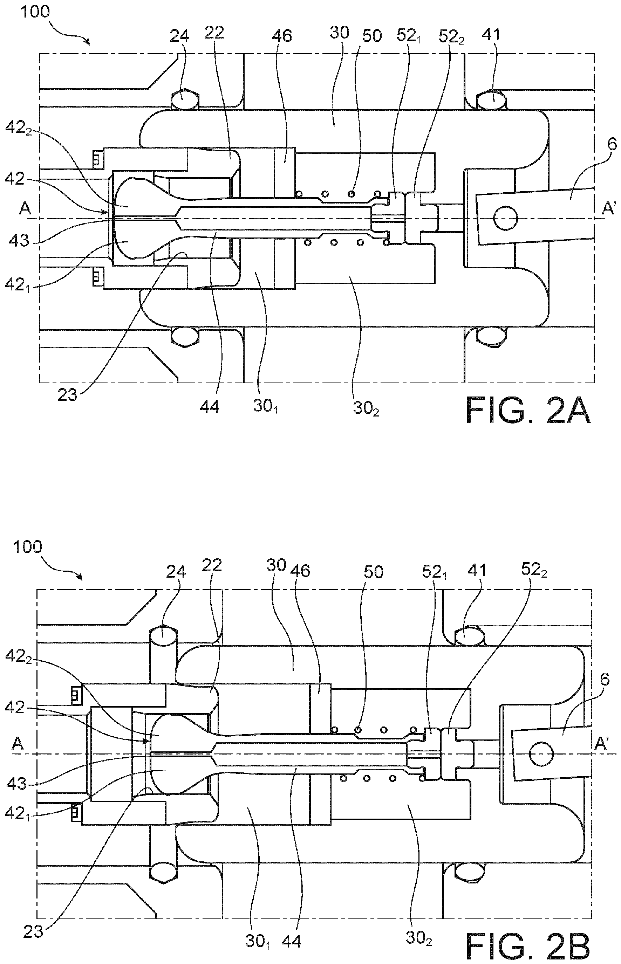

The disconnector extends along an axis AA' (parallel to the axis X) and comprises for example a pair of contacts 2, 4 mounted to move at least partly relative to each other along said axis AA' with help of an actuation system 6, 8 which is for moving an electrically conducting tube 30 (see Figures 1 and 2A). This tube 30 can be moved along said axis AA' from a closed position in which the electric current can flow through the contacts to an open position in which the electric current is interrupted and vice-versa.

By convention, the term "main contact" is used to designate an electrical contact via which the rated current passes; the main contact is associated with an "arcing contact" which performs the function of breaking and establishing the contact proper. The term "moving contact" is used to designate the movable arcing contact and the tube that are both connected to the actuation system 6, 8.

The disconnector comprises:
- a first movable contact 4 made up of an arcing contact 42, e.g. in the form of a plurality of fingers, and of a main contact 30, 41 (the contact 41 being stationary with respect to the arcing contact 42);
- and a second contact 2 that is stationary in this example, made up of an arcing contact 22 and of a main contact 24.

These two elements co-operate between an open position in which the two contacts 2, 4 are electrically separated from each other and a closed position (not shown on figure 1) in which they allow electrical current to pass between them (thanks to the translation of tube 30).

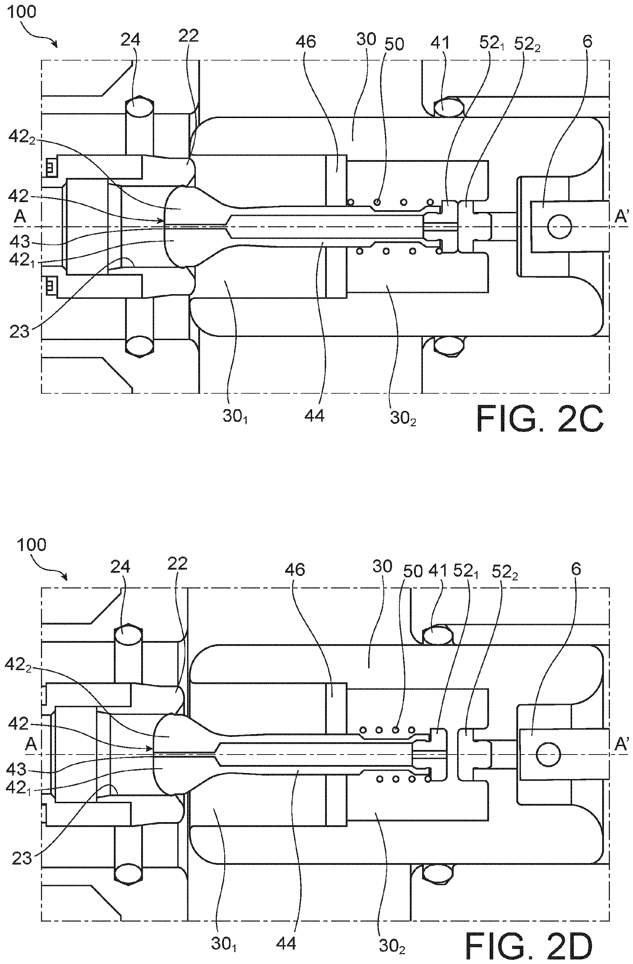

During the breaking procedure, the two main contacts 30, 41 and 24 separate, and then the arcing contacts 42, 21 take over (figures 2C and 2D).

An example of a circuit breaker according to the invention is more precisely illustrated on Figures 2A-2E. It extends along the longitudinal axis AA'.

The movable electrode 4 comprises the main contact 41 (for example a spring contact which is not movable), and a movable tube 30, and the arcing contact 42.

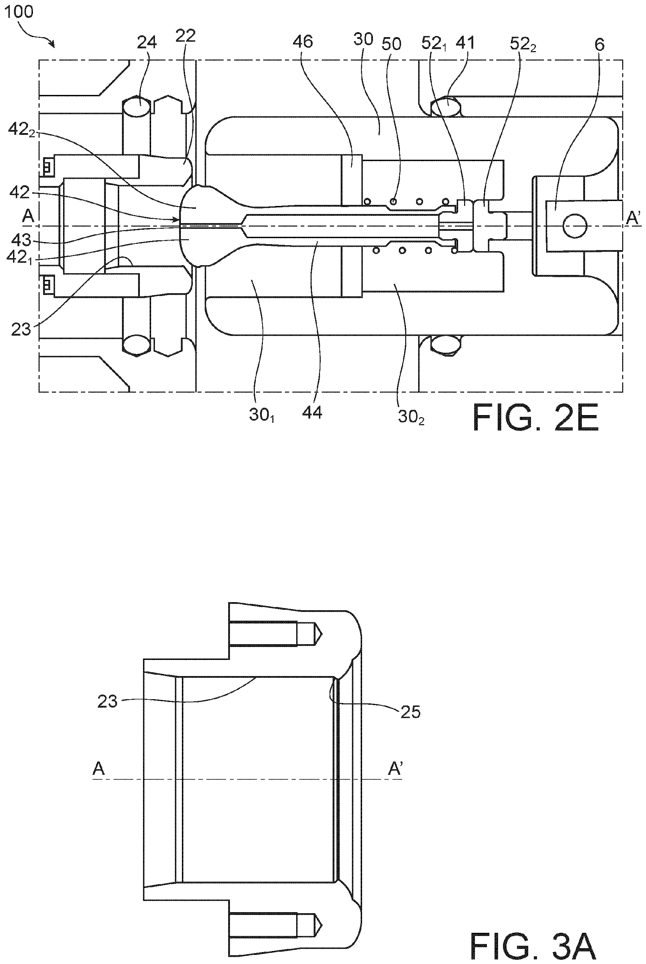

The movable tube 30 can be moved along axis AA' between a closed position (figure 2A) and an open position (figure 2E), with help of an actuation system 6, 8.

The movable arcing contact 42 is formed at the end of a rod or a tube 44 made of a conducting material, preferably the same as the contact 42.

The arcing contact 42 has for example the form of a bulb having an external diameter which is larger than the external diameter of the rod or tube 44 and which is slightly larger than the internal diameter of the fixed arcing contact 22. The end 42 comprises for example at least two fingers 42₁, 42₂ which have some elasticity so that they can be pressed against the fixed arcing contact 22; they are separated by a central duct 43 which gives the fingers some freedom to be pressed in the direction of the axis AA', in particular when the arcing contact 42 enters the fixed arcing contact 22.

The movable arcing contact 42 is slidably mounted in the cylinder 30 so that it can slide along the AA' axis with respect to the tube 30. For example it is guided in a wall 46 which separates the inside volume of the cylinder 30 from the whole disconnector gas compartment. The cylinder 30 thus comprises two chambers, a front chamber 30₁ and a rear chamber 30₂.

This wall 46 bears the movable arcing contact 42 via the insulating bearings in order to be able to electrically isolate the arcing contact 42 from the tube 30.

One end of a spring or compression spring 50 bears against the wall 46 or a part fixed with respect to said wall, or a part fixed with respect to the tube 30, its other end bearing against a metallic end (or back) contact 52₁, located at the end of the rod 44. End contact 52₁ faces another metallic end (or back) contact 52₂ which is maintained by the cylinder 30. Both contacts 52₁ and 52₂ can be in contact (see figures 2A-2C for example) or can be separated from each other (see figure 2D for example): they move with respect to each other along the axis AA'.

Figure 3A shows a portion of the fixed arcing contact 22, which comprises an internal cylindrical surface 23 provided with a restriction 25 against which the movable arcing contact 42 bears when driven along the axis AA' during the opening phase. Said restriction may extend over the whole periphery of the surface 23 (around axis AA') or only over part of it. The movable arcing contact is thus slowed down or stopped for a small period time during said opening phase, so that an arc between contacts 52₁ and 52₂ is extinguished, the contacts being separated from each other by a distance of for example 1 mm. Said period of time and/or said distance depend on the characteristics of the spring 50.

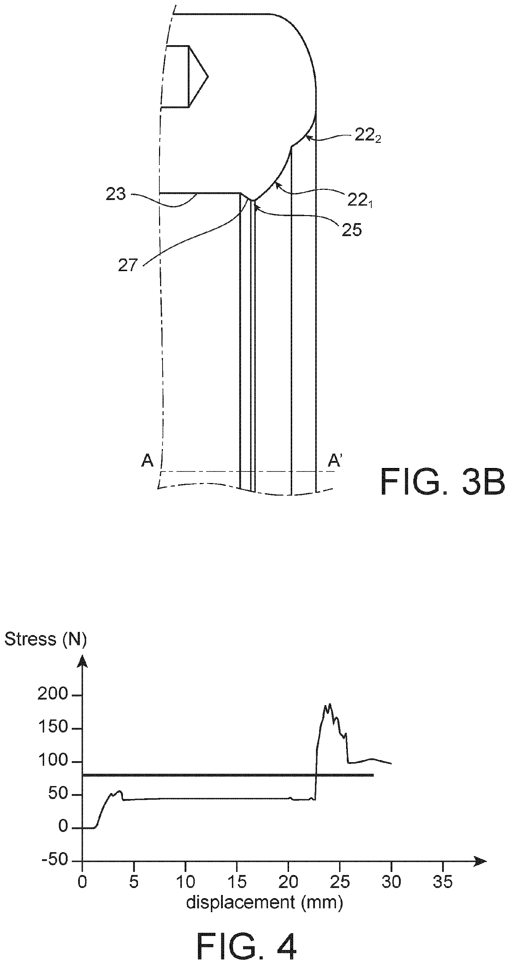

Figure 3B shows a detail of an embodiment of the restriction 25. It comprises a shoulder 27 with which the movable arcing contact 42 comes into contact after sliding against the internal surface 23: the flexible fingers 42₁, 42₂ of the arcing contact 42 slightly bend towards the AA' axis but remain in contact with the surface of the restriction 25 of the arcing contact 22. The shoulder preferably has a flat surface inclined of about 30°, or of an angle between 20° and 40°, with respect to the axis AA', s. It is followed by the end face 22₁ of the fixed arcing contact which can comprise one or more surface(s) 22₁, 22₂:, for example:
- a first (dielectric) surface 22₁ which preferably ensures a smooth finger compression during a closing operation;
- and possibly a second dielectric surface 22₂.

Other shapes of the restriction 25 are possible, to ensure that they briefly slow down or even briefly stop the arcing contact 42, so that the spring 50 compresses and that the contacts 52₁ and 52₂ separate from each other. For example the restriction can have a teeth shape or can comprise a trigger with spring.

The flexible fingers 42₁, 42₂ of the arcing contact 42 have an outside diameter larger than the internal cylindrical surface 23 to ensure a good electrical contact with it. The restriction 25 presses the fingers in the direction of the axis AA'.

Figures 2A-2E show different steps of the opening phase of a disconnector according to the invention. It is controlled by the mechanism which drives the insulating rod 6 in translation and in rotation around the rotation axis 16.

A first position is illustrated on figure 2A, in which both electrodes 2 and 4 are in contact through the main contacts 24, 41 (which in this example are both spring contacts) and the tube 30, as well as the back contacts 52₁ and 52₂.

After initiation of the opening phase, the tube 30 slides against the main contact 24 (figure 2B) until they separate (figure 2C), the arcing contact 42 sliding against arcing contact 22. The current flows through the arcing contacts 42, 22, the tube 44, the back contacts 52₁ and 52₂ (which are still connected together) and the cylinder 30.

After a certain time, the movable arcing contact 42 comes in contact with surface 25 (figures 3A and 3B), which slows down or stops the movement of the movable arcing contact 42; this results in the opening of the back contacts 52₁ and 52₂ (figure 2D) thus triggering an arc between these 2 contacts 52₁ and 52₂, in a rear chamber 30' where the decomposition of the gas is harmlessthe spring 50 being compressed.

After the movable arcing contact 42 is unlocked from the surface 25 and the compression of the spring 50 is released (figure 2E;, which:
- presses contact 52₁ and 52₂ against each other, thereby ensuring the electrical potential of movable arcing contact 42 after the opening;
- forces the arcing contacts 22, 42 to separate; no arc is generated between them when they separate because the current is already broken by the back contacts 52₁ and 52₂.

The first peak on the left of figure 4 shows the compression of the fingers when contacting surface 23 ; it is followed by a flat region which corresponds to a sliding movement along surface 23, and by a second peak on the right which shows the compression of the fingers on restriction 25. This results in an increased friction, which compresses spring 50 to open rear contacts 52₁ and 52₂. Contacts 52₁ and 52₂ thus are opened when the arcing contact is in physical contact with restriction 25.

Since an arc is generated between the arcing contacts 52₁ and 52₂, decomposition of the gas occurs in the rear chamber 30₂, avoiding decomposition in the whole disconnector gas chamber. Since the arc is generated inside the rear chamber 30₂, the gas decomposition will only occur inside this rear chamber, and will not pollute the whole disconnector gas chamber (where dielectric strength is critical).

The actuation system 6, 8 (forming means, or a two-armed lever, for opening the disconnector) comprises for example a rod 6 actuated at one of its ends 62 by a lever 8 (see figure 1) mounted to pivot about an axis 14 (perpendicular to the axis AA' of the disconnector). The other end 64 of the rod 6 is mounted in rotation (in the XZ plane, see figure 1) about an axis 16 to move the cylinder 30 along the axis AA'. In other words, the actuation system converts the rotation of the axis 14 (driven by a mechanism not explained in detail) into a translation of the cylinder along axis AA'.

The opening of the disconnector thus comprises the following steps:
- a step of closing the arcing contacts 22, 42;
- a step of separating the tube 30 from one (24) of the main contacts;
- a step of slowing down or stopping the movable arcing contact with respect to the tube 30, thereby opening the back contacts (figure 2D), which triggers an arc between them, away from said arcing contacts 22, 42;
- a step of opening the arcing contacts 22, 42;.
- a step of closing the back contacts in order not to have a floating potential after the opening sequence (Fig 2E).

The back contacts 52₁, 52₂ thus separate before the arcing contacts 22, 42 separate.

The closing of the disconnector can comprise the following steps:
- a step of closing the arcing contacts 22, 42;
- a step of closing the main contacts 24, 41;
- a step of opening the arcing contacts 22, 42 to let the current flow only via the main contacts

The invention finds application in GIS which operate under a rather low voltage (for example 27V, more generally between 10V and 500V) and at a rather low current (for example 3000A, more generally between 1000A and 6300.A)

## Claims

1. A disconnector (100) for a GIS comprising, in a gas chamber and along an axis (AA'):
- a pair of permanent contacts (24, 41), both being fixed;
- an electrically conducting tube (30) movable along said axis (AA') the tube (30) moving from a position in which both permanent contacts are in electrical contact to a position in which both main contacts are electrically separated;
- a pair of arcing contacts (22, 42), one (22) fixed and the other one (42) movable with respect to said electrically conducting tube (30);
- a pair of rear contacts (52₁, 52₂), one of them (52₂) being in electrical contact with said movable arcing contact (42);
- means (25) for slowing down or stopping the movable arcing contact (42) when separating it from the fixed arcing contact (22);
- means (6) for moving said electrically conducting tube (30) and said movable arcing contact (22, 42) along said axis (AA'), thereby opening said disconnector (100) and for separating said rear contacts (52₁, 52₂) from each other before the arcing contacts (22, 42) separate.

2. A disconnector according to claim 1, said means (25) for slowing down or stopping the movable arcing contact when separating it from the fixed arcing contact comprising a restriction (25) of the fixed arcing contact (22).

3. A disconnector according to claim 2, said restriction of the fixed arcing contact comprising a surface inclined with respect to the axis (AA').

4. A disconnector according to claim 3, said surface being inclined with respect to the axis (AA') with an angle comprised between 20° and 40°.

5. A disconnector according to any of claims 1 to 4, comprising a rod (44) having a first end forming the movable arcing contact (42) and a second end forming or bearing one of said rear contacts (52₁).

6. A disconnector according to claim 5, said rod (44) being mounted slidable with respect to said tube (30).

7. A disconnector according to any of claims 1 to 6, comprising means (50) for pressing said rear contacts (52₁, 52₂) towards each other.

8. A disconnector according to claim 7, said means for pressing said rear contacts towards each other comprising a compression spring (50).

9. A disconnector according to claim 8, said compression spring (50) comprising a first end bearing against a part (46) fixed with respect to said tube (30) and a second end bearing against one (52₁) of said back contacts.

10. A disconnector according to any of claims 1 to 9, a wall (46) separating said gas chamber in a rear gas chamber (30₂), which contains said rear contacts (52₁, 52₂) and a front chamber (30₁) which contains said arcing contacts when they are closed.

11. A disconnector according to any of claims 1 to 10, one (52₂) of said rear contacts being electrically linked and fixed with respect to the movable electrically conducting tube (30).

12. A GIS comprising:
- a metal tank (1) filled with a gas;
- a disconnector (100) according to any of claims 1 to 11.

13. A GIS according to claim 11 said gas comprising:
- heptafluoroisobutyronitrile and/or heptafluoroisopropyl trifluoromethyl ketone (also named 2- butanone, 1,1,1,3,4,4,4-heptafluoro-3-(trifluoromethyl)- (CAS No 756-12-7)), possibly mixed with a gas or a dilution gas comprising at least CO2 and/or O2 and/or N2 and/or an oxygenated compound;
- or comprising at least CO2 and/O2 and/or N2 and/or an oxygenated compound and/or water vapor.

14. A method for opening a disconnector of a GIS according to claim 12 or 13, comprising:
- moving the movable arcing contact (42) and the tube (30) with respect to the fixed arcing contact (22) and the main contacts, thereby closing the pair of arcing contacts and electrically separating the pair of permanent contacts (24, 41);
- slowing down or stopping the movement of the movable arcing contact (42) with respect to the tube (30)
- separating said pair of rear contacts (52₁, 52₂) from each other before the arcing contacts (22, 42) separate, thereby triggering an arc between said rear contacts;
- separating said movable arcing contact (42) from or with respect to the fixed arcing contact (22) and closing said pair of rear contacts (52₁, 52₂).

15. A method for closing a disconnector of a GIS according to claim 12 or 13, comprising:
- moving the movable arcing contact (42) and the tube (30) with respect to the fixed arcing contact (22) and the main contacts (24, 41), thereby closing the pair of arcing contacts;
- closing the main contacts (24, 41);
- opening the arcing contacts (22, 42).
